# EUROPÄISCHE PATENTANMELDUNG

(11) **EP 0 938 179 A2**
(43) Veröffentlichungstag der Anmeldung: **25.08.1999**
(21) Anmeldenummer: 99102408.4
(22) Anmeldetag: 08.02.1999
(51) Int. Cl.: H02G 3/08

(54) **Installationseinrichtung**

(30) Priorität: 19.02.1998 DE 29802944 U
(71) Anmelder: SIEMENS AKTIENGESELLSCHAFT, 80333 München (DE)
(72) Erfinder: Kristen, Winfried, Dr., D-68542 Hettesheim (DE)

(57) **Zusammenfassung**

Installationseinrichtung als Aktor eines Bussystems der Gebäudesystemtechnik, als Schaltaktor oder Steuerteil eines Bussystems, Tasters oder einer Steckdose oder ähnlichem, bei der ein Einbauteil (1) in einer Einbaudose (2) anordbar ist, wobei im Bedarfsfall das Einbauteil von einer Bedienoberfläche aus bedienbar ist. Es ist vorgesehen daß das Einbauteil (1) für eine Einbaulage mit überwiegend vertikaler Komponente zur Bedienoberfläche ausgebildet ist, wobei Anschlußelemente (3) für Betriebsspannungsleiter (4) auf einer ersten Seite und Anschlußelemente (7) für Informationsspannungsleiter (8) und für Versorgungsspannungsleiter, z.B. Sensorleiter (9), auf einer hierzu versetzten Seite angeordnet sind.

## Beschreibung

Die Erfindung bezieht sich auf eine Installationseinrichtung als Aktor eines Bussystems der Gebäudesystemtechnik, als Schaltaktor oder Steuerteil eines Bussystems, Tasters oder einer Steckdose oder ähnlichem, bei der ein Einbauteil in einer Einbaudose der Installationstechnik anordbar ist, im einzelnen nach Gattungsbegriff von Anspruch 1. Im Bedarfsfall ist das Einbauteil von einer Bedienoberfläche aus bedienbar.

Bei einem Aktor oder einen geschilderten ähnlichen Bauteil für ein Bussystem sind einerseits Busleiter anzuschließen und andererseits Betriebsspannungsleiter eines Installationssystems. Beim Bus der European Installation Bus Association, beim Bus "EIB", werden zwar über ein verdrilltes Adernpaar sowohl Informationen als auch die Energie für die Bordnetzversorgung von Teilnehmerstationen übertragen, die Energieleiter für Betriebsspannung anzuschließender Verbraucher sind jedoch gesondert zu führen. An einem Aktor oder dergleichen sind also nach nationalen und internationalen Bestimmungen für das Errichten von Starkstromanlagen die Leiter für 24 Volt Gleichspannung oder allgemein für "Safety Extra Low Voltage" von den Leitern der 230/400 Volt Wechselspannung sicher zu trennen. Die Mantelisolation von Busleitung und Energieleitung sind für 4 kV Prüfspannung auszulegen. Nach Entfernen der Mantelisolation müssen entsprechende Abstände zwischen den Leitern der Busleitung und den Leitern der Energieleitung eingehalten werden. In einer Einbaudose für Unter-Putz-Montage mit in der Regel einer Tiefe von 60 mm ist die sichere Isolation zwischen anzuschließenden Energieleitern und Busleitern problematisch.

Der Erfindung liegt die Aufgabe zugrunde, eine Installationseinrichtung zu entwickeln, bei der die Isolation zwischen Leitern für "Safety Extra Low Voltage" und Energieleitern auch auf dem engen Raum, der in einer Einbaudose zur Verfügung steht, gewährleistet ist.

Die Lösung der geschilderten Aufgabe erfolgt durch eine Installationseinrichtung nach Anspruch 1. Hierbei ist das Einbauteil für eine Einbaulage mit überwiegend vertikaler Komponente zur Bedienoberfläche ausgebildet. Die Anschlußelemente für Betriebsleiter sind auf einer ersten Seite und die Anschlußelemente für Informationsleiter und gegebenenfalls für Versorgungsspannungsleiter, z.B. Sensorleiter, auf einer hierzu versetzten Seite des Einbauteils angeordnet. Hierdurch läßt sich ein ausreichender Sicherheitsabstand einhalten. Unter Betriebsspannungsleitern werden hier Energieleiter für Verbraucher eines Installationssystems verstanden. Unter Informationsspannungsleitern sollen hier solche für "Safety Extra Low Voltage" verstanden werden, also beispielsweise für 24 V. Hierunter werden also auch die Leiter des EIB-Busses verstanden, die außer der Information auch Gleichspannung für Energie zur Versorgung der Bordnetze in Teilnehmerstationen führen.

Insbesondere kann als versetzte Seite die zur ersten Seite gegenüberliegende Seite genutzt werden. Die Einbaulage kann in der Praxis in etwa senkrecht zur Bedienoberfläche ausgeführt sein. Eine derartige Einbaulage kann bestimmungsgemäß oder durch hängebügelartige Vorrichtungen vorgegeben sein.

Zu den jeweiligen Leitern für die zwei Spannungsarten können entsprechende Leiter hinzukommen. So können Leiter zum Anschließen von potentialfreien Meldekontakten und/oder Leiter zum Anschließen von Sensoren im Anschlußbereich für die Informationsleiter angeschlossen werden. Insbesondere kann ein Sensor ein Temperaturfühler sein.

Die Erfindung soll nun anhand von in der Zeichnung grob schematisch wiedergegebenen Ausführungsbeispielen näher erläutert werden:
- In Figur 1: ist ein Behältnis nach Art einer Installationseinbaudose, kurz Einbaudose genannt, in Draufsicht wiedergegeben, in das ein Einbauteil eingesetzt ist, das beiderseits der Längserstreckung senkrecht zur Zeichenebene Installationsräume bildet.
- In Figur 2: ist eine Seitenansicht einer Einbaudose nach Figur 1 veranschaulicht.

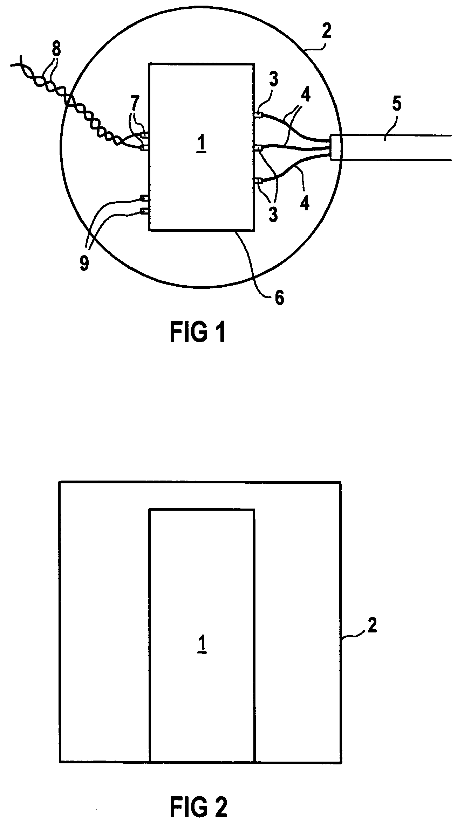

Die Installationseinrichtung nach Figur 1 ist als Aktor eines Bussystems der Gebäudesystemtechnik im weiteren Sinn zu verstehen, bei der ein Einbauteil 1 in einer Einbaudose 2 angeordnet ist. Im Bedarfsfall kann das Einbauteil von einer Bedienoberfläche in der Zeichenebene aus bedient werden. Das Einbauteil 1 ist für eine Einbaulage mit überwiegend vertikaler Komponente hinsichtlich der Zeichenebene bzw. zu einer Bedienoberfläche ausgebildet. Anschlußelemente 3 für Betriebsspannungsleiter 4 einer Betriebsspannungsleitulg 5 sind auf einer ersten Seite des Einbauteils 1 angeordnet. Anschlußelemente 7 für Informationsleiter 8 sind auf einer hierzu versetzten Seite, im Ausführungsbeispiel auf der gegenüberliegenden Seite, angeordnet.

Im Ausführungsbeispiel ist die Einbaulage des Einbauteils 1 senkrecht zur Bedienoberfläche ausgeführt. Im Ausführungsbeispiel sind Anschlußelemente 9 für Leiter zum Anschließen von potentialfreien Meldekontakten und/oder zum Anschließen von Sensoren im Anschlußbereich für die Informationsleiter 8 ausgeführt.

In Figur 2 ist in Seitenansicht die Einbaudose 2 und das Einbauteil 1 ohne Anschluß veranschaulicht. Eine Einbaudose nach Art einer Unterputz-Einbaudose weist in der Praxis Abmessungen für Durchmesser x Tiefe von 60 x 60 mm² und das Einbauteil Abmessungen Höhe x Breite x Tiefe von 55 x 50 x 20 mm³ auf. Im Bereich der Anschlußelemente 7 für die Informationsleiter können Leiter für Fensterkontakte oder für einen Temperaturfühler angeordnet sein. Auf der anderen Seite des Einbauteils 1 können wieder die Anschlußelemente 3 für Betriebsspannungsleiter ausgeführt sein. Wenn die Mäntel der Leitungen entfernt und die Leiter an den Anschlußelementen jeweils angeschlossen werden, befinden sich die 230 Volt führenden Leiter auf der einen Seite des Aktors und die dagegen zu isolierenden Leiter auf der anderen Seite. Dieses Prinzip kann verständlicherweise auch in Einbaudosen anderer Abmessungen und in anderen Einbaugehäusen entsprechend genutzt werden.

## Patentansprüche

1. Installationseinrichtung als Aktor eines Bussystems der Gebäudesystemtechnik, als Schaltaktor oder Steuerteil eines Bussystems, Tasters oder einer Steckdose oder ähnlichem, bei der ein Einbauteil (1) in einer Einbaudose (2) anordbar ist, wobei im Bedarfsfall das Einbauteil von einer Bedienoberfläche aus bedienbar ist,
**dadurch gekennzeichnet,** daß
das Einbauteil (1) für eine Einbaulage mit überwiegend vertikaler Komponente zur Bedienoberfläche ausgebildet ist, wobei Anschlußelemente (3) für Betriebsspannungsleiter (4) auf einer ersten Seite und Anschlußelemente (7) für Informations- (8) und Versorgungsspannungsleiter auf einer hierzu versetzten Seite angeordnet sind.

2. Installationseinrichtung nach Anspruch 1,
**dadurch gekennzeichnet,** daß
als versetzte Seife die zur ersten Seite gegenüberliegende Seite beaufschlagt ist.

3. Installationseinrichtung nach Anspruch 1 oder 2,
**dadurch gekennzeichnet,** daß
die Einbaulage senkrecht zur Bedienoberfläche ausgeführt ist.

4. Installationseinrichtung nach einem der Ansprüche 1 bis 3, **dadurch gekennzeichnet,** daß
Anschlußelemente (9) für Leiter zum Anschließen von potentialfreien Meldekontakten und/oder Leitern zum Anschließen von Sensoren im Anschlußbereich für die Informationsleiter angeordnet sind.

5. Installationseinrichtung nach Anspruch 4,
**dadurch gekennzeichnet,** daß
der Sensor ein Temperaturfühler, Helligkeitsfühler oder Fensterkontakt ist.
